# EUROPÄISCHE PATENTSCHRIFT

(11) **EP 2 558 975 B1**
(45) Veröffentlichungstag und Bekanntmachung des Hinweises auf die Patenterteilung: **18.06.2014**
(21) Anmeldenummer: 11711886.9
(22) Anmeldetag: 01.04.2011
(51) Int. Cl.: G06K 7/10, G06K 7/00, G06K 19/073, G06K 19/10, G06K 19/07

(54) **VERFAHREN UND ELEKTRONISCHES SYSTEM ZUM LESEN VON DATEN AUS EINEM DOKUMENT**
METHOD AND ELECTRONIC SYSTEM FOR READING DATA FROM A DOCUMENT, READER, DOCUMENT
PROCÉDÉ ET SYSTÈME ÉLECTRONIQUE POUR LIRE DES DONNÉES SUR UN DOCUMENT

(30) Priorität: 12.04.2010 DE 102010003853
(43) Veröffentlichungstag der Anmeldung: 20.02.2013
(73) Patentinhaber: Bundesdruckerei GmbH, 10958 Berlin (DE)
(72) Erfinder: TIETKE, Markus, 10365 Berlin (DE); HILLE, Jakob, 14199 Berlin (DE); FISCHER, Joerg, 13053 Berlin (DE)
(74) Vertreter: Richardt Patentanwälte PartG mbB
(86) Internationale Anmeldenummer: PCT/EP2011/055133
(87) Internationale Veröffentlichungsnummer: WO 2011/128216

(56) Entgegenhaltungen:
- WO-A1-2006/061001
- WO-A1-2009/090602
- WO-A2-2007/141338
- KINNEGING T A F: "Machine Readable Travel Documents Technical Report PKI for Machine Re", INTERNET CITATION, Oktober 2004 (2004-10), XP002396748, [gefunden am 2006-08-29]

## Beschreibung

Aus EP 1 891 607 B1 ist ein Verfahren zum Zugriff von einer Datenstation auf ein elektronisches Gerät bekannt. Das elektronische Gerät ist Bestandteil eines Dokuments und beinhaltet eine Zuordnungstabelle, in der unterschiedlichen Datenobjekten des Dokuments ein Basis Access Control (BAC)- und/oder ein Extended Access Control (EAC)-Protokoll zugeordnet ist, je nachdem, welchen Grad der Schutzbedürftigkeit ein betreffendes Datenobjekt hat. Aus der WO 2007/141338 A2 ist eine Weiterbildung dieses Verfahrens bekannt.

Aus der zum Anmeldezeitpunkt unveröffentlichten DE 10 2009 055 285 derselben Anmelderin ist ein Verfahren zum Zugriff von einem Lesegerät auf ein Dokument bekannt, wobei das Dokument zur Ausführung erster und zweiter kryptografischer Protokolle ausgebildet ist, und wobei von dem Dokument eines der kryptografischen Protokolle in Abhängigkeit von dem Lesegerät ausgewählt wird.

Aus WO 2007/141338 A2 ist ein Lesegerät für ein Dokument und ein Verfahren zum Lesen eines Datenobjekts bekannt. Hierbei erfolgt die Kommunikation zwischen einem Lesegerät und dem Dokument mittels eines RIFD-Verfahrens um ein Challenge-Response-Protokoll auszuführen.

Aus WO 2009/090602 A1 ist ein RF-Gerät bekannt, welches konfigurierbar ist, um gerätespezifische "Fingerabdrücke" in dem emittierten RF-Signal zu erzeugen.

Der Erfindung liegt demgegenüber die Aufgabe zugrunde, ein verbessertes Verfahren zum Lesen von Daten aus einem Dokument, ein Lesegerät, Dokument sowie ein elektronisches System zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen der Erfindung betreffen ein Verfahren zum Lesen von Daten aus einem Dokument mit Hilfe eines Lesegeräts.

Bei dem Dokument kann es sich um ein papierbasiertes und/oder kunststoffbasiertes Dokument, insbesondere ein Wert- oder Sicherheitsdokument, wie zum Beispiel ein Ausweisdokument, insbesondere einen Reisepass, Personalausweis, Visum oder einen Führerschein, Fahrzeugschein, Fahrzeugbrief, Firmenausweis, Gesundheitskarte oder ein anderes ID-Dokument oder eine Chipkarte, Zahlungsmittel, insbesondere eine Banknote, Bankkarte oder Kreditkarte, einen Frachtbriefe oder einen sonstigen Berechtigungsnachweis handeln.

Das Dokument hat eine kontaktlose Kommunikations-Schnittstelle, wie zum Beispiel eine RFID- oder NFC-Schnittstelle. Die Kommunikations-Schnittstelle dient neben der Nachrichtenübertragung zwischen dem Lesegerät und dem Dokument auch zur Energieversorgung des Dokuments, indem induktiv Energie in das Dokument eingekoppelt wird. Hierzu bildet das Lesegerät die Primärseite und das Dokument die Sekundärseite eines Übertragers, wenn sich das Dokument innerhalb der Reichweite des Lesegeräts befindet.

Nach Ausführungsformen der Erfindung haben sowohl das Lesegerät als auch das Dokument jeweils eine Sende- und Empfangsspule, die miteinander gekoppelt sind, sodass über den so gebildeten Übertrager einerseits elektrische Energie induktiv von dem Lesegerät in das Dokument eingekoppelt werden kann und andererseits eine Datenkommunikation zwischen dem Lesegerät und dem Dokument über die induktiv gekoppelten Sende- und Empfangsspulen stattfinden kann.

Durch das Anlegen einer primärseitigen Spannung an die Primärseite, beispielsweise also die Sende- und Empfangsspule des Lesegeräts, wird elektrische Energie in die Sekundärseite, d.h. das Dokument, eingekoppelt, sodass der Prozessor des Dokuments mit Spannung versorgt wird und aktiviert wird, sodass die Ausführung von Programminstruktionen durch den Prozessor gestartet wird. Der Prozessor steuert dann den zumindest einen elektrischen Verbraucher an, um eine zeitlich veränderliche sekundärseitige Last zu realisieren.

Aufgrund der elektromagnetischen Kopplung der Sende- und Empfangsspulen hat diese zeitlich veränderliche sekundärseitige Last eine Rückwirkung auf die Primärseite, insbesondere auf die primärseitige Spannung, den primärseitigen Strom oder das primärseitige Resonanzverhalten, d.h. die durch die Primärseite gebildete komplexe Impedanz, die durch die sich zeitlich verändernde Last eine Modulation erfährt. Diese Modulation wird durch das Lesegerät ausgewertet, um in Abhängigkeit von einem Ergebnis der Auswertung einen Lesezugriff zum Lesen der Daten auszuführen.

Nach einer Ausführungsform der Erfindung wird durch die Modulation der primärseitigen Spannung aufgrund der zeitlich veränderlichen sekundärseitigen Last ein Sicherheitsmerkmal des Dokuments gebildet. Zur Prüfung dieses Sicherheitsmerkmals wird durch das Lesegerät geprüft, ob die Modulation der primärseitigen Spannung aufgrund der zeitlich veränderlichen sekundärseitigen Last ein vorgegebenes Kriterium erfüllt. Bei dem vorgegebenen Kriterium kann es sich um ein bestimmtes Modulationsmuster und/oder um eine bestimmte Information handeln, die aufgrund der Modulation durch das Lesegerät empfangen wird. Alternativ oder zusätzlich kann aufgrund der Modulation der primärseitigen Spannung durch das Lesegerät ein Dokumententyp des Dokuments erkannt werden und/oder ein kryptografischer Schüssel aus einer aufgrund der Modulation empfangenen Information abgeleitet werden, der für den Lesezugriff erforderlich ist.

Nach einer Ausführungsform der Erfindung hat die primärseitige Spannung eine Frequenz von > 1 MHz, insbesondere 13,56 MHz. Beispielsweise sind das Dokument und das Lesegerät zur Ausführung eines RFID- oder NFC-Verfahrens für die Herstellung eines kontaktlosen Kommunikationskanals ausgebildet.

Nach einer Ausführungsform der Erfindung wird in einem ersten Zeitintervall durch das Lesegerät eine hochfrequente Trägerwelle erzeugt, ohne dass jedoch seitens des Lesegeräts eine Nachricht über die Trägerwelle an das Dokument gesendet wird. Über die Trägerwelle versorgt also das Lesegerät das Dokument durch induktive Einkopplung mit Energie, sodass die Ausführung von Programminstruktionen durch den Prozessor des Dokuments gestartet wird und der Prozessor den zumindest einen Verbraucher des Dokuments entsprechend einer vorgegebenen Ansteuersequenz ansteuert.

Hierdurch wird während des ersten Zeitintervalls, in dem die primärseitige Spannung anliegt, durch die zeitliche Veränderung der sekundärseitigen Last eine Modulation der primärseitigen Spannung bewirkt. Erst nach der Auswertung dieser Modulation wird in einem zweiten Zeitintervall eine bidirektionale Kommunikationsverbindung nach einem RFID- oder NFC-Verfahren zwischen dem Lesegerät und dem Dokument aufgebaut, sofern die Auswertung der Modulation ein bestimmtes Kriterium erfüllt. Insbesondere kann dann das Lesegerät ein Lesekommando an das Dokument nach dem RFID- oder NFC-Verfahren über die Trägerwelle senden.

Nach einer Ausführungsform der Erfindung handelt es sich bei der Ansteuersequenz um eine Schaltsequenz mit der verschiedene Verbraucher des Dokuments in einer bestimmten Reihenfolge ein- und ausgeschaltet werden. Bei den Verbrauchern kann es sich zum Beispiel um ein oder mehrere Anzeigevorrichtungen, einen biometrischen Sensor, einen Touchpanel und/oder Touchpad, einen Temperatursensor, einen Bewegungssensor, eine Kamera handeln.

Nach einer Ausführungsform der Erfindung wird die Last dadurch variiert, dass eine Sequenz von verschiedenen Bildern auf der Anzeigevorrichtung des Dokuments wiedergegeben wird, wobei die verschiedenen Bilder so ausgestaltet sind, dass sie jeweils zu einer unterschiedlichen Leistungsaufnahme der Anzeigevorrichtung führen. Insbesondere ist dies für eine emissive Anzeigevorrichtung der Fall, wenn Bilder unterschiedlicher Helligkeitswerte angezeigt werden. Durch die nacheinander erfolgende Anzeige der verschiedenen Bilder aufgrund einer entsprechenden Ansteuerung der Anzeigevorrichtung durch den Prozessor des Dokuments wird also die sekundärseitige Last variiert, was zu einer entsprechenden Modulation der Primärseite, insbesondere der primärseitigen Spannung, des primärseitigen Stroms oder des primärseitigen Resonanzverhaltens, d.h. der durch die Primärseite gebildeten komplexen Impedanz, führt.

In einem weiteren Aspekt betrifft die Erfindung ein Lesegerät mit primärseitigen Mitteln zum Senden einer Trägerwelle zur induktiven Einkopplung von Energie in das Dokument, durch welches die Sekundärseite gebildet wird, Mitteln zur Auswertung einer Modulation der Trägerwelle aufgrund einer Veränderung der sekundärseitigen Last, und Mitteln zum Lesen von in einem elektronischen Speicher des Dokuments gespeicherten Daten in Abhängigkeit von einem Ergebnis der Auswertung der Modulation.

In einem weiteren Aspekt betrifft die Erfindung ein Dokument mit einem elektronischen Speicher zur Speicherung von Daten, Prozessormitteln zum Lesen der Daten aus dem Speicher, zumindest einem von den Prozessormitteln ansteuerbaren elektrischen Verbraucher und einer kontaktlosen Kommunikations-Schnittstelle zur Einkopplung einer Trägerwelle, wobei die Prozessormittel und der zumindest eine Verbraucher zur Energieversorgung mit der Kommunikations-Schnittstelle gekoppelt sind, wobei die Prozessormittel zur Ansteuerung des zumindest einen elektrischen Verbrauchers nach einer vorgegebenen Ansteuerungssequenz ausgebildet sind, um die durch den zumindest einen Verbraucher gebildete Last zu variieren. Diese Variation der Last erfolgt bevor ein Lesezugriff durch das Dokument freigegeben wird.

In einem weiteren Aspekt betrifft die Erfindung ein elektronisches System, welches zumindest ein erfindungsgemäßes Lesegerät und zumindest ein erfindungsgemäßes Dokument beinhaltet. Das elektronische System kann auch verschiedene erfindungsgemäße Dokumente unterschiedlicher Dokumententypen beinhalten, wobei dann durch die typspezifische zeitliche Veränderung der sekundärseitigen Last jeweils unterschiedliche Modulationsmuster erzeugt werden, die zur Erkennung des Dokumententyp durch das Lesegerät dienen können.

Nach Ausführungsformen der Erfindung erfolgt die Auswertung der Modulation der Spannung durch eine Analyse des Amplitudenverlaufs der primärseitigen Spannung und/oder des Phasenverlaufs. Dies kann durch eine Demodulation, wie zum Beispiel mit Hilfe eines Hüllkurvenempfängers des Lesegeräts erfolgen. Alternativ oder zusätzlich kann die Auswertung der Modulation der primärseitigen Spannung durch die Erstellung eines Spektrums der primärseitigen Spannung durch das Lesegerät zum Beispiel mittels Fast Fourier Transformation (FFT) oder Diskreter Fourier Transformation (DFT) erfolgen. Weiterhin kann ein Spannungsverlauf der Hüllkurve durch einen Filter, insbesondere einen Tiefpassfilter und/oder einen Hochpassfilter, aufgenommen werden. Das Spektrum oder die Hüllkurve kann dann mit einem Referenzspektrum oder einer Referenzhüllkurve verglichen werden, um die Erfüllung des vorgegebenen Kriteriums zu überprüfen. Stimmt beispielsweise das von dem Lesegerät ermittelte Spektrum/Hüllkurve mit dem Referenzspektrum/Referenzhüllkurve hinreichend überein, so gilt das betreffende Sicherheitsmerkmal des Dokuments als erfüllt.

Im Weiteren werden Ausführungsformen der Erfindung mit Bezugnahme auf die Zeichnungen näher erläutert. Es zeigen:
- Figur 1a: ein Blockdiagramm einer Ausführungsform eines erfindungsgemäßen Lesegeräts, Dokuments und elektronischen Systems,
- Figur 1b: ein Blockdiagramm einer weiteren Ausführungsform eines erfindungsgemäßen Lesegeräts, Dokuments und elektronischen Systems,
- Figur 1c: eine gemessene Hüllkurve im Vergleich zu einer Referenzhüllkurve der primärseitigen Spannung,
- Figur 2: ein Flussdiagramm einer Ausführungsform eines erfindungsgemäßen Verfahrens,
- Figur 3: ein Blockdiagramm einer weiteren Ausführungsform eines erfindungsgemäßen Systems,
- Figur 4: ein Flussdiagramm einer weiteren Ausführungsform eines erfindungsgemäßen Verfahrens.

Im Weiteren werden einander entsprechende Elemente der nachfolgenden Ausführungsformen mit denselben Bezugszeichen gekennzeichnet.

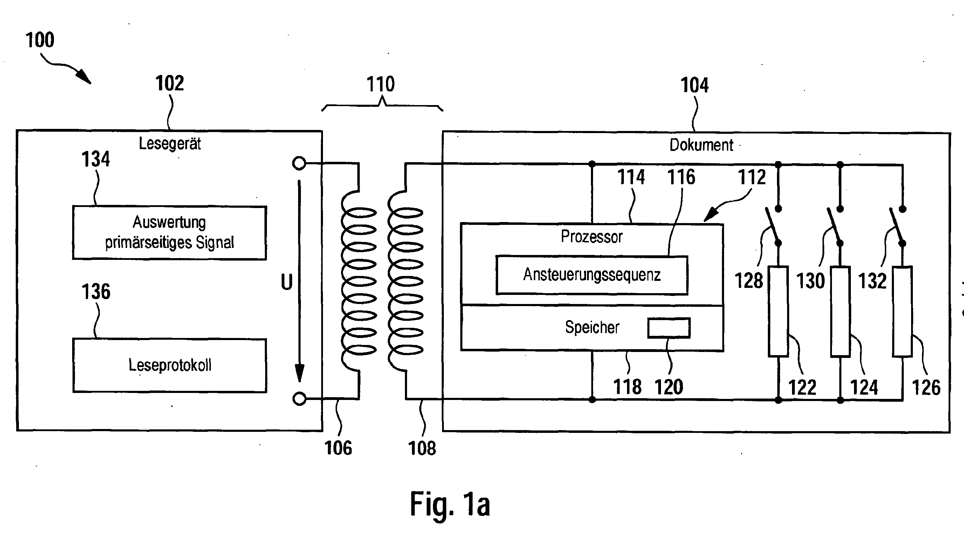

Die Figur 1a zeigt ein elektronisches System 100 mit einem Lesegerät 102 und einem Dokument 104. Das Lesegerät 102 hat eine Spule 106 und das Dokument hat eine Spule 108. Wenn sich das Dokument 104 in der Reichweite des Lesegeräts 102 befindet, so sind die Spulen 106 und 108 elektromagnetisch gekoppelt. Durch die Kopplung der Spulen 106 und 108 wird dann ein Übertrager 110 gebildet, der hier sowohl zur induktiven Einkopplung von elektrischer Energie von dem Lesegerät 102 in das Dokument 104 als auch für die Nachrichtenübertragung, zum Beispiel nach einem RFID-Verfahren oder einem NFC-Verfahren, dient.

Das Dokument 104 hat eine elektronische Schaltung 112, wie zum Beispiel eine integrierte Schaltung auf der Basis eines Halberleiterchips oder eine gedruckte polymerelektronische Schaltung. Die elektronische Schaltung 112 hat einen Prozessor 114 zur Ausführung von Programminstruktionen, insbesondere zur Ausführung der Programminstruktionen 116, durch die eine Ansteuerungssequenz definiert wird. Die elektronische Schaltung 112 hat ferner einen elektronischen Speicher 118, in dem beispielsweise zumindest ein Datenobjekt 120 gespeichert ist. Bei dem Datenobjekt 120 kann es sich um persönliche Angaben zu dem Inhaber des Dokuments 104, Angaben zu der Behörde, die das Dokument 104 ausgestellt hat, oder eine andere Information handeln.

Die elektronische Schaltung 112 ist parallel zu der Spule 108 geschaltet, sodass die elektronische Schaltung 112 mit Spannung versorgt wird, sobald Energie induktiv von dem Lesegerät 102 in die Spule 108 eingekoppelt wird. Ebenfalls parallel zu der Spule 108 sind ein oder mehrere Verbraucher des Dokuments 104 geschaltet, in der hier betrachteten Ausführungsform die Verbraucher 122, 124 und 126. Die Verbraucher sind über Schalter 128, 130 bzw. 132 von dem Prozessor 114 schaltbar. Beispielsweise handelt es sich bei den Schaltern 128, 130 und 132 um steuerbare Halbleiterschalter, insbesondere Transistoren, über die der Prozessor 114 durch Ausführung der Programminstruktionen 116 die Verbraucher jeweils zu- oder abschalten kann.

Durch das Lesegerät 102 wird eine Spannung U an die Spule 106 angelegt, wie zum Beispiel eine hochfrequente Spannung einer Frequenz von 1 MHz oder mehr, insbesondere 13,56 MHz. Hierdurch wird eine Trägerwelle erzeugt, durch welche Energie induktiv in die Spule 108 eingekoppelt wird.

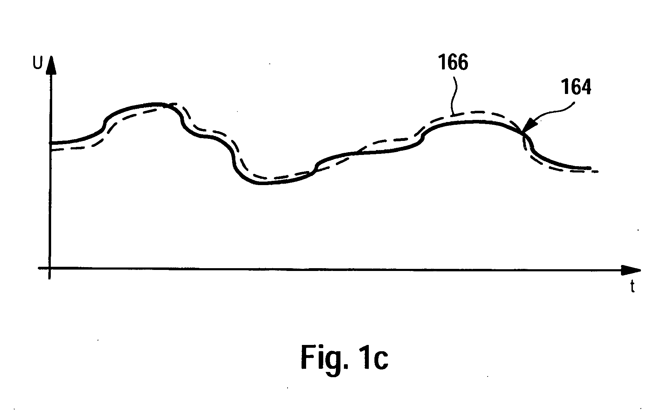

Das Lesegerät 102 hat eine Auswerteeinheit 134 zur Auswertung einer Modulation der Spannung U, welche diese aufgrund der Ansteuerungssequenz und der damit einhergehenden sekundärseitigen Variation der Last erfährt. Die Auswertung kann beispielsweise so erfolgen, dass ein Spektrum der modulierten Spannung U durch FFT oder DFT von der Auswerteeinheit 134 berechnet und mit einem Referenzspektrum verglichen wird. Weiterhin kann ein Spannungsverlauf der Hüllkurve der Spannung U von der Auswerteeinheit 134 aufgenommen und mit einer Referenzhüllkurve verglichen werden (vgl. Fig. 1c). Wenn die beiden Spektren und/oder Hüllkurven hinreichend miteinander übereinstimmen, so gilt das Sicherheitsmerkmal des Dokuments, welches durch die Ansteuerungssequenz 116 und die damit angesteuerten Verbraucher gegeben ist, als erfüllt.

Je nach Ausführungsform kann dies eine notwendige oder hinreichende Voraussetzung dafür sein, dass anschließend durch eine Logikkomponente 136 des Lesegeräts 102 ein Leseprotokoll zum Lesen des Datenobjekts 120 durchgeführt wird. Hierzu kann die Logikkomponente 136 ein Lesekommando generieren, welches über den Übertrager 110 zu dem Dokument 104 übertragen und dort von dem Prozessor 114 verarbeitet wird. Der Prozessor 114 greift dann auf den Speicher 118 zu, um das Datenobjekt 120 auszulesen und eine Antwort auf das Lesekommando zu generieren, mit der das Datenobjekt 120 über den Übertrager 110 an das Lesegerät 102 übertragen wird.

Bei den Verbrauchern 122, 124 und 126 kann es sich zum Beispiel um eine Anzeigevorrichtung, einen Temperatursensor, einen Bewegungsensor, einen Fingerabdrucksensor bzw. eine Kamera zur Aufnahme eines Irisscan handeln.

Nach Ausführungsformen der Erfindung handelt es sich bei der in das Dokument integrierten Anzeigevorrichtung um eine bistabile Anzeigevorrichtung, eine elektrophoretische Anzeige, eine elektrochrome Anzeige, eine Flüssigkeitskristallanzeige (LCD), LED-Anzeige, insbesondere anorganische LED- oder organische LED-Anzeige (OLED), Drehelementanzeige, Balkenanzeige, Photolumineszenz-Löschungsanzeige oder eine Anzeige auf Basis des Elektrowetting-Effekts oder eine Hybridanzeige. Die Anzeigevorrichtung kann als Matrixdisplay, insbesondere als emissives Matrixdisplay ausgebildet sein.

Die Auswerteeinheit 134 und die Logikkomponente 136 können durch ein oder mehrere Mikroprozessoren des Lesegeräts 102 und entsprechende Programmmodule und/oder Logikschaltungen gebildet werden. Entsprechendes gilt für die Implementierung der Ansteuerungssequenz, welche ebenfalls ganz oder teilweise programmgesteuert und/oder über fest verdrahtete Logik erfolgen kann.

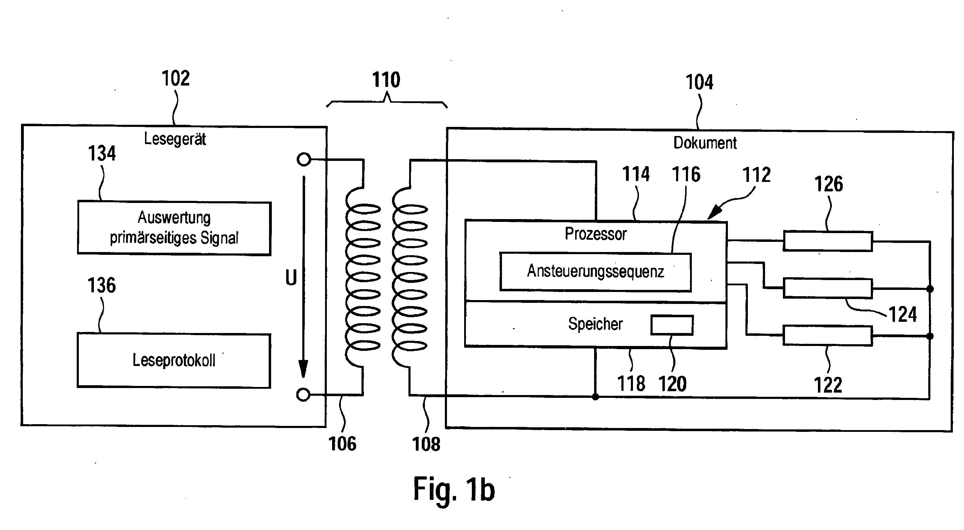

Die Figur 1b zeigt eine Ausführungsform bei der die Verbraucher 122, 124 und 126 mit jeweils einem ihrer Anschlüsse direkt an dem Prozessor 112 angeschlossen sind. Die Versorgungsspannung liegt dann über einem der Verbraucher also zwischen dem Prozessor 114 und einem Spannungsabgriff der Spule 108 an, wie in der Fig. 1b dargestellt. Die separaten Schalter 128, 130, 132 können bei dieser Ausführungsform entfallen, da der Prozessor 114 intern die Spannung an dessen Ausgängen, an denen die Verbraucher 122, 124 bzw. 126 angeschlossen sind, schalten kann.

Die Figur 1c zeigt eine Referenzhüllkurve 164, die in dem Lesegerät 102 gespeichert ist, wie z.B. in der Auswerteeinheit 134 (vgl. die Ausführungsformen der Fig. 1 a und Fig. 1 b). Das Lesegerät kann einen Hüllkurvenempfänger aufweisen, der mit der Spule 106 gekoppelt ist, um eine Hüllkurve 166 des zeitlichen Verlaufs der Spannung U zu ermitteln, wie in der Fig. 1c in gestrichelten Linien gezeigt. Wenn der tatsächliche Verlauf der Hüllkurve 166 hinreichend mit dem Verlauf der Referenzkurve 164 übereinstimmt, so ist ein vorgegebenes Kriterium erfüllt; beispielsweise gilt damit ein Sicherheitsmerkmal des Dokuments als erfüllt oder ein der Referenzkurve 164 zugeordneter Dokumententyp als erkannt.

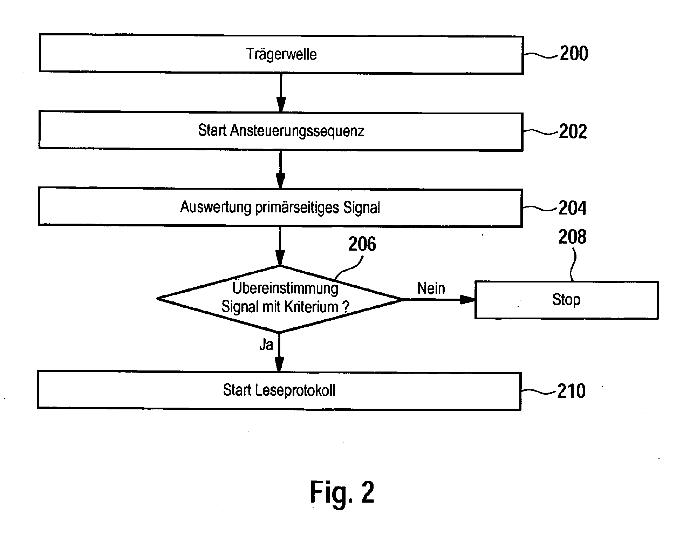

Die Figur 2 zeigt ein entsprechendes Flussdiagramm. In dem Schritt 200 sendet das Lesegerät 102 durch Anlegen der hochfrequenten Spannung U eine Trägerwelle, durch die induktiv Energie in das Dokument 104 eingekoppelt wird. Dadurch liegt eine Versorgungsspannung an der elektronischen Schaltung 112 an, aufgrund deren die Ausführung der Programminstruktionen 116 durch den Prozessor 114 beginnt (Schritt 202), da aufgrund der angelegten Spannung ein Oszillator der Schaltung 112 anschwingt. Aufgrund der Ausführung der Programminstruktionen 116 werden dann die Verbraucher 122, 124 und 126 in einer zeitlichen Reihenfolge angesteuert, um die sekundärseitige Last, die das Dokument 104 für das Lesegerät 102 bildet, zu variieren. Beispielsweise werden hierzu die Schalter 128, 130 und 132 nacheinander geschlossen und anschließend nacheinander wieder geöffnet, und zwar in einer durch die Programminstruktionen 116 vorgegebenen Reihenfolge. Durch diese zeitliche Variation der sekundärseitigen Last wird die Amplitude und/oder die Phase der Spannung U moduliert, was durch die Auswerteeinheit 134 ausgewertet wird (Schritt 204). Wenn diese Modulation der Spannung U einem vorgegebenen Kriterium entspricht (Schritt 206), wird durch das Lesegerät 102 die Ausführung des Leseprotokolls durch die Logikkomponente 136 gestartet, sodass das Lesegerät 102 über den Übertrager ein Lesekommando an das Dokument 104 sendet, um auf das Datenobjekt 120 lesend zuzugreifen (Schritt 210). Im gegenteiligen Fall kommt es zu einem Abbruch in dem Schritt 208.

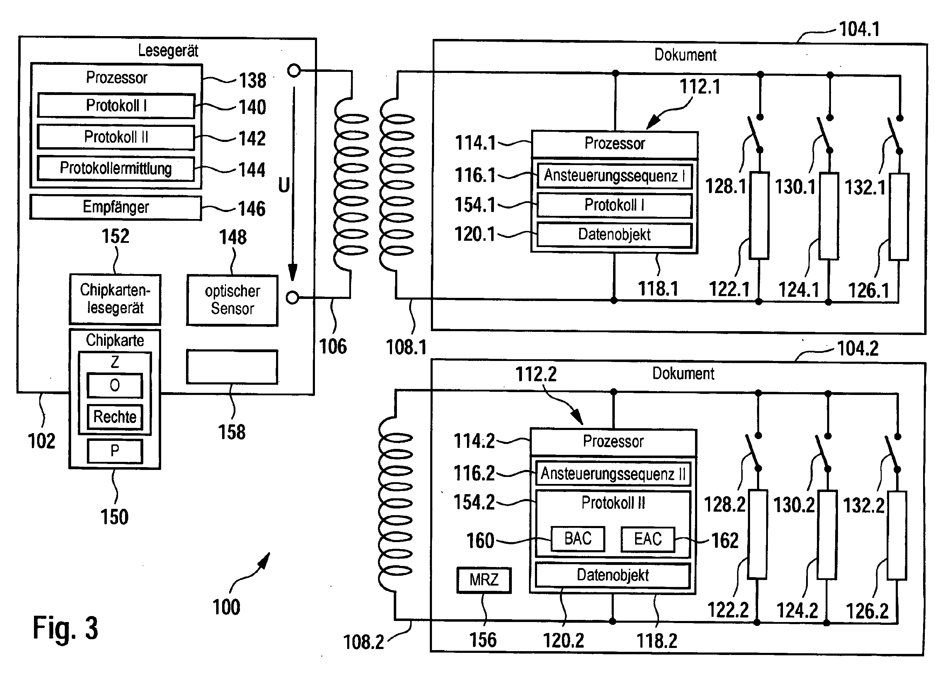

Die Figur 3 zeigt eine weitere Ausführungsform eines erfindungsgemäßen elektronischen Systems 100, wobei das Lesegerät 102 bei dieser Ausführungsform einen Prozessor 138 zur Ausführung von Programminstruktionen 140, 142 und 144 aufweist.

Die Programminstruktionen 140 implementieren die das Lesegerät 102 betreffenden Schritte eines ersten kryptografischen Protokolls I, wohingegen die Programminstruktionen 142 die das Lesegerät 102 betreffenden Schritte eines zweiten kryptografischen Protokolls II implementieren. Der Prozessor 138 dient ferner zur Ausführung der Programminstruktionen 144, die zur Auswahl eines der von dem Lesegerät 102 unterstützten kryptografischen Protokolle, d.h. hier der Protokolle I oder II dienen.

Das Lesegerät 102 hat ferner einen Empfänger 146 zur Demodulation der Spannung U. Beispielsweise gewinnt der Empfänger 146 eine Information durch Demodulation der Spannung U und übergibt diese Information an den Prozessor 138 für die Protokollermittlung durch die Programminstruktionen 144.

Das Lesegerät 102 kann ferner einen optischen Sensor 148, wie zum Beispiel einen Scanner zum Lesen einer Machine Readable Zone (MRZ) aufweisen. Ferner kann das Lesegerät 102 einen Sicherheitstoken beinhalten oder auf einen Sicherheitstoken (wie zum Beispiel eine Chipkarte 150) über einen Chipkarten-Lesegerät 152 zugreifen. In der Chipkarte 150 kann kryptografisches Schlüsselmaterial zur Durchführung einer der von dem Lesegerät 102 unterstützten Protokolle gespeichert sein, wie zum Beispiel ein privater Schlüssel P und ein Zertifikat Z einer Public Key Infrastructure (PKI), welches den zu dem privaten Schlüssel P gehörenden öffentlichen Schlüssel O beinhaltet sowie eine Spezifizierung von Zugriffsrechten.

Zu dem elektronischen System 100 gehören ferner das Dokument 104.1 und das Dokument 104.2, die strukturell analog aufgebaut sind, aber unterschiedliche Dokumententypen aufweisen.

Der Prozessor 114.1 des Dokuments 104.1 dient zur Ausführung von Programminstruktionen 116.1, die eine erste Ansteuerungssequenz I des ersten Dokumententyps implementieren. Dagegen dient der Prozessor 114.2 des Dokuments 104.2 zur Durchführung der Programminstruktionen 116.2, die eine zweite Ansteuerungssequenz II des zweiten Dokumententyps implementieren.

Beispielsweise können sich die Ansteuerungssequenzen I und 11 hinsichtlich der Schaltsequenz unterscheiden, in der die Schalter 128.1, 130.1 und 132.1 bzw. die Schalter 128.2, 130.2 und 132.2 geschaltet werden. Beispielsweise werden die Schalter 128.1, 130.1 und 132.1 in dieser Reihenfolge gemäß der Ansteuerungssequenz I nacheinander geschlossen, wohingegen gemäß der Ansteuerungssequenz II die Schalter 132.2, 130.2 und 128.2 in dieser Reihenfolge geschlossen werden. Ferner können sich die Dokumententypen hinsichtlich der Anzahl, Art und der Größe der Last der Verbraucher 122.1, 124.1, 126.1 bzw. 122.2, 124.2 und 126.2 unterscheiden. Insbesondere können die Verbraucher unterschiedliche reale oder imaginäre, d.h. induktive oder kapazitive Anteile, aufweisen.

Der Prozessor 114.1 dient ferner zur Ausführung von Programminstruktionen 154.1 durch die die das Dokument 104.1 betreffenden Schritte des kryptografischen Protokolls I implementiert werden. Dagegen dient der Prozessor 114.2 zur Ausführung von Programminstruktionen 154.2, durch die die das Dokument 104.2 betreffenden Schritte eines kryptografischen Protokolls II implementiert werden. In den Speichern 118.1 und 118.2 der Dokumente 104.1 und 104.2 können unterschiedliche Datenobjekte 120.1 bzw. 120.2 gespeichert sein.

Das Dokument 104.2 trägt zusätzlich eine maschinenlesbare Zeile (Machine Readable Zone - MRZ), beispielsweise wie von der Internationalen Luftfahrtbehörde (ICAO) spezifiziert, und zwar in Form eines optisch lesbaren Aufdrucks 156.

Bei der hier betrachteten Ausführungsform handelt es sich bei dem Protokoll I um ein Passwort basiertes Diffie-Hellman-Schlüssel-Vereinbarungsprotokoll, beispielsweise das von dem Bundesamt für Sicherheit in der Informationstechnik spezifizierte PACE-Protokoll. Dementsprechend hat das Lesegerät 118 eine Schnittstelle, insbesondere eine Tastatur 158, zur Eingabe eines Passworts (PW).

Das Protokoll II implementiert dagegen hier sowohl ein Basis Access Control-Protokoll als auch ein Extended Access Control-Protokoll, beispielsweise so wie von der ICAO spezifiziert. Die Programminstruktionen 154.2 beinhalten daher Programminstruktionen 160 zur Implementierung der das Dokument 104.2 betreffenden Schritte des Basis Access Control-Protokolls sowie Programminstruktionen 162 zur Implementierung der das Dokument 104.2 betreffenden Schritte des Extended Access Control-Protokolls.

Entsprechend verhält es sich für das Lesegerät 102 dessen Programminstruktionen 140 die das Lesegerät 102 betreffenden Schritte der Protokolls I, d.h. beispielsweise des PACE Protokolls, und dessen Programminstruktionen 142 die zur Implementierung der das Lesegerät 102 betreffenden Schritte des Basis Access Control-Protokolls und des Extended Access Control-Protokolls beinhalten.

Wenn das Dokument 104.1 in die Reichweite des Lesegeräts 102 gebracht wird, so wird aufgrund der durch Anlegen der primärseitigen Spannung U erzeugten Trägerwelle Energie in das Dokument 104.1 eingekoppelt und die Ausführung der Programminstruktionen 116.1 gestartet, sodass die Schalter 128.1, 130.1 und 132.1 in der durch die Ansteuerungssequenz I gegebenen Reihenfolge geschlossen und geöffnet werden, sodass sich eine zeitlich variable sekundärseitige Last ergibt, die zu einer entsprechenden Modulation der Spannung U führt. Diese für den Dokumententyp I charakteristische Modulation der Spannung U zeigt dem Lesegerät 102 an, dass es sich bei dem Dokument 104.1 um ein Dokument des ersten Dokumententyps handelt. Hierzu wird die Spannung U durch den Empfänger 146 demoduliert, sodass das Lesegerät 102 ein bestimmtes Muster empfängt, welches durch Ausführung der Programminstruktionen 144 ausgewertet wird. Beispielsweise wird das empfangene Muster mit Referenzmustern der Dokumententypen I und II verglichen und bei Übereinstimmung des empfangenen Musters mit dem Referenzmuster des ersten Dokumententyps die Ausführung der Programminstruktionen 140 ausgewählt.

Die Ausführung der Programminstruktionen 140 und 154.1 wird dann gestartet, um das Protokoll I auszuführen. Hierzu muss der Benutzer sein Passwort über die Tastatur 158 eingeben. Nach erfolgreicher Durchführung des Protokolls I wird das Datenobjekt 120.1 aus dem Speicher 118.1 ausgelesen und von dem Dokument 104.1 an das Lesegerät 102 übertragen.

Analog verhält es sich für das Dokument 104.2, wenn dieses anstelle des Dokuments 104.1 in die Reichweite des Lesegeräts 102 gebracht wird. Aufgrund der Ansteuerungssequenz II, die dann abläuft, empfängt das Lesegerät 102 ein anderes Muster, welches zur Erkennung des Protokolls II führt. Mit Hilfe des optischen Sensors 148 des Lesegeräts 102 wird dann die MRZ, d.h. der Aufdruck 156, gelesen, aus dem ein symmetrischer Schlüssel abgeleitet wird.

Dieser symmetrische Schlüssel wird von dem Lesegerät 102 an das Dokument 104.2 übertragen und durch Ausführung der Programminstruktionen 160 mit einem Referenzwert verglichen. Stimmt der empfangene symmetrische Schlüssel mit dem Referenzwert überein, so wird anschließend durch Ausführung der Programminstruktionen 162 das EAC ausgeführt. Hierzu muss sich das Lesegerät 102 mit Hilfe der Chipkarte 150 gegenüber dem Dokument 104.2 authentifizieren, beispielsweise nach einem sogenannten Challenge-Response-Protokoll. Außerdem muss von dem Lesegerät 102 das Zertifikat Z an das Dokument 104.2 übertragen werden, sodass durch Ausführung der Programminstruktionen 162 geprüft werden kann, ob das Lesegerät 102 die zum Zugriff auf das Datenobjekt 120.2 erforderlichen Rechte hat. Wenn auch das EAC erfolgreich ausgeführt worden ist, wird das Datenobjekt 120.2 aus dem Speicher 118.2 gelesen und an das Lesegerät 102 übertragen.

Bei der hier betrachteten Ausführungsform ist besonders vorteilhaft, dass durch die Ansteuerungssequenzen I und II nicht nur jeweils ein Sicherheitsmerkmal gegeben ist, sondern auch eine Möglichkeit für das Lesegerät 102 den jeweiligen Dokumententyp zu erkennen, ohne dass das Lesegerät ein Kommando oder andere Daten senden muss; hierzu reicht hingegen lediglich das Anlegen der Spannung U zum Absenden der Trägerwelle aus. Erst nach der Erkennung des jeweiligen Dokumententyps kann eine typspezifische Kommunikation zwischen dem Lesegerät 102 und dem jeweiligen Dokument durchgeführt werden. Besonders vorteilhaft ist dabei, dass mit dem Lesegerät 102 verschiedene Dokumententypen gelesen werden können.

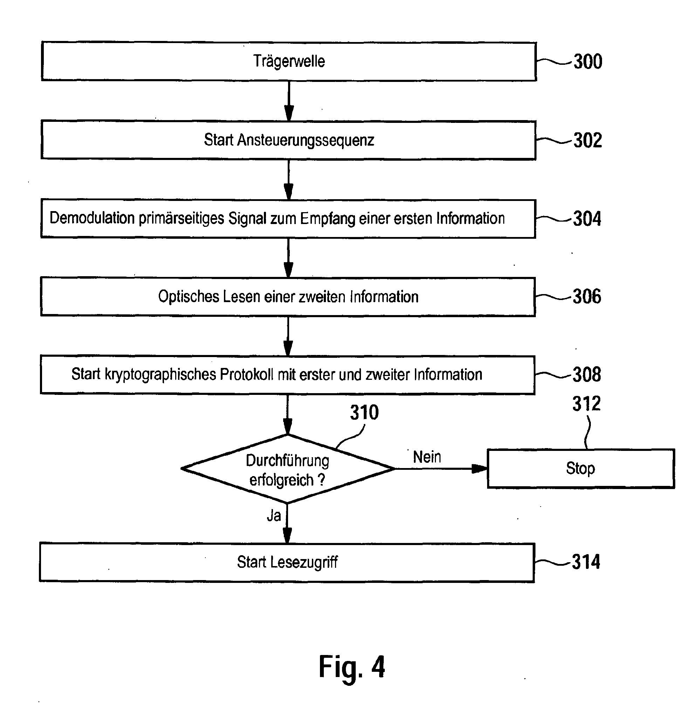

Die Figur 4 zeigt ein Flussdiagramm einer weiteren Ausführungsform eines erfindungsgemäßen Verfahrens. In dem Schritt 300 wird durch das Lesegerät primärseitig eine Trägerwelle abgestrahlt. Wenn eine Ausführungsform eines erfindungsgemäßen Dokuments in die Reichweite des Lesegeräts gebracht wird, so wird die Ausführung der vorgegebenen Ansteuerungssequenz durch den Prozessor des Dokuments gestartet, sodass sich eine zeitlich variierende sekundärseitige Last ergibt.

Durch diese zeitliche Variation wird der primärseitigen Spannung U eine erste Information aufmoduliert, die durch Demodulation in dem Schritt 304 durch das Lesegerät empfangen wird. Ferner wird mittels des optischen Sensors des Lesegeräts (vgl. optischer Sensor 148 des Lesegeräts in der Ausführungsform gemäß Figur 3) eine zweite Information gelesen, wie zum Beispiel die MRZ des Dokuments.

In dem Schritt 308 wird ein kryptografisches Protokoll gestartet, wobei die erste und die zweite Information für die Durchführung des kryptografischen Protokolls verwendet werden. Beispielsweise werden die erste Information und die zweite Infor mation konkateniert, einer bitweisen XOR-Operation unterzogen oder auf andere Art und Weise miteinander kombiniert. Die sich daraus ergebende Information kann zum Beispiel zur Ableitung eines symmetrischen Schlüssels durch Ausführung des kryptografischen Protokolls verwendet werden. Dieser symmetrische Schlüssel wird von dem Lesegerät an das Dokument übertragen und dort mit einem Referenzwert verglichen. Wenn keine Übereinstimmung vorliegt, ist die Durchführung des kryptografischen Protokolls nicht erfolgreich gewesen (Schritt 310) und es erfolgt ein Abbruch in dem Schritt 312. Ist das Gegenteil der Fall, so signalisiert das Dokument gegenüber dem Lesegerät, dass die Durchführung des kryptografischen Protokolls erfolgreich war, und es wird daraufhin von dem Lesegerät ein Lesezugriff auf die in dem Speicher des Dokuments gespeicherten Daten durchgeführt.

Hierdurch lässt sich beispielsweise das BAC dahingehend erweitern, dass nicht nur Informationen optisch aus der MRZ erfasst werden, sondern zusätzlich Informationen aufgrund der zeitlichen Variierung der Last von dem Dokument empfangen werden. Diese Informationen werden miteinander verknüpft und bilden dann die Grundlage für die weitere Durchführung des Protokolls. Aufgrund dieser Erweiterung behält das BAC seine ursprüngliche Funktion, da zwingend das optische Lesen der MRZ erforderlich ist, und wird gleichzeitig noch sicherer gemacht, da neben dem Lesen der MRZ auch der Empfang der ersten Information aufgrund der Modulation der Last erforderlich ist.

### Bezugszeichenliste

- 100: elektronisches System
- 102: Lesegerät
- 104: Dokument
- 106: Spule
- 108: Spule
- 110: Übertrager
- 112: elektronische Schaltung
- 114: Prozessor
- 116: Programminstruktionen
- 118: elektronischer Speicher
- 120: Datenobjekt
- 122: Verbraucher
- 124: Verbraucher
- 126: Verbraucher
- 128: Schalter
- 130: Schalter
- 132: Schalter
- 134: Auswerteeinheit
- 136: Logikkomponente
- 138: Prozessor
- 140: Programminstruktionen
- 142: Programminstruktionen
- 144: Programminstruktionen
- 146: Empfänger
- 148: optischer Sensor
- 150: Chipkarte
- 152: Chipkarten-Lesegerät
- 154: Programminstruktionen
- 156: Aufdruck
- 158: Tastatur
- 160: Programminstruktionen
- 162: Programminstruktionen

## Patentansprüche

1. Verfahren zum Lesen von Daten (120) aus einem Dokument (104) mit Hilfe eines Lesegeräts (102), wobei durch das Lesegerät die Primärseite eines Übertragers (110) gebildet wird, wobei das Dokument einen elektronischen Speicher (118) zur Speicherung der Daten, Prozessormittel (114) zum Lesen der Daten aus dem Speicher und zumindest einen von den Prozessormitteln ansteuerbaren elektrischen Verbraucher (128, 130, 132) aufweist, wobei durch das Dokument die Sekundärseite des Übertragers gebildet wird, und wobei die Prozessormittel und der zumindest eine Verbraucher zur Energieversorgung mit der Sekundärseite gekoppelt sind, mit folgenden Schritten:
- Anlegen einer primärseitigen Spannung (U) an die Primärseite zur Einkopplung von Energie in die Sekundärseite,
- Ansteuerung des zumindest einen Verbrauchers durch die Prozessormittel entsprechend einer vorgegebenen Ansteuersequenz, wodurch eine zeitlich veränderliche sekundärseitige Last gebildet wird, durch welche die Primärseite eine Modulation erfährt,
- Auswertung der Modulation der Primärseite durch das Lesegerät, um in Abhängigkeit von einem Ergebnis der Auswertung einen Lesezugriff zum Lesen der Daten auszuführen, **dadurch gekennzeichnet, dass** es sich bei dem Verbraucher um eine Anzeigevorrichtung handelt, und wobei die Ansteuersequenz eine Sequenz zur Ansteuerung der Anzeigevorrichtung für die Wiedergabe von verschiedenen Bildern, für die jeweils eine unterschiedliche Leistungsaufnahme der Anzeigevorrichtung erforderlich ist, beinhaltet.

2. Verfahren nach Anspruch 1, wobei die primärseitige Spannung eine Frequenz von mehr als 1 MHz, insbesondere 13,56 MHz aufweist.

3. Verfahren nach Anspruch 1 oder 2, wobei durch die primärseitige Spannung eine hochfrequente Trägerwelle zum Senden eines Lesekommandos von dem Lesegerät an das Dokument erzeugt wird, wobei das Lesekommando erst nach der Auswertung der Modulation gesendet wird.

4. Verfahren nach einem der vorhergehenden Ansprüche, wobei nach Auswertung der Modulation der Aufbau einer Kommunikationsverbindung nach einem RFID- oder NFC-Verfahren zwischen dem Lesegerät und dem Dokument erfolgt, um die Daten aus dem Dokument auszulesen.

5. Verfahren nach einem der vorhergehenden Ansprüche, wobei zur Auswertung der Modulation ein Vergleich mit einem vorgegebenen Kriterium erfolgt, wobei eine Voraussetzung für die Durchführung des Lesezugriffs ist, dass das vorgegebene Kriterium erfüllt ist.

6. Verfahren nach einem der vorausgehenden Ansprüche, wobei das Dokument einen ersten oder einen zweiten Dokumententyp aufweist, wobei durch Auswertung der Modulation der Dokumententyp des Dokuments erkannt wird, und in Abhängigkeit von dem erkannten Dokumententyp der Lesezugriff durchgeführt wird.

7. Verfahren nach Anspruch 6, wobei nach Erkennung des ersten Dokumententyps ein erstes kryptographisches Protokoll erfolgreich durchgeführt werden muss, um den Lesezugriff durchführen zu können, und wobei nach Erkennung des zweiten Dokumententyps ein zweites kryptographisches Protokoll durchgeführt werden muss, um den Lesezugriff durchführen zu können.

8. Verfahren nach einem der vorhergehenden Ansprüche, wobei durch Auswertung der Modulation eine erste, vorbestimmte Information durch das Lesegerät empfangen wird, wobei das Dokument eine optisch lesbare zweite Information trägt, wobei die zweite Information mit Hilfe eines optischen Sensors (158) des Lesegeräts gelesen wird und aus den ersten und zweiten Informationen ein Schlüssel für die Ermöglichung der Durchführung des Lesezugriffs abgeleitet wird.

9. Elektronisches System mit einem Lesegerät für ein Dokument (104) mit
- primärseitigen Mitteln (106) zum Senden einer Trägerwelle zur induktiven Einkopplung von Energie in das Dokument, durch welches eine Sekundärseite gebildet wird,
- Mitteln (134) zur Auswertung einer Modulation der Trägerwelle aufgrund einer Veränderung der sekundärseitigen Last,
- Mitteln (102; 138) zum Lesen von in einem elektronischen Speicher (118) des Dokuments gespeicherten Daten (120) in Abhängigkeit von einem Ergebnis der Auswertung der Modulation und zumindest einem Dokument mit einem elektronischen Speicher (118) zur Speicherung von Daten, Prozessormitteln (114) zum Lesen der Daten aus dem Speicher, zumindest einem von den Prozessormitteln ansteuerbaren elektrischen Verbraucher (128, 130, 132) und einer kontaktlosen Kommunikations-Schnittstelle (108) zur Einkopplung einer Trägerwelle, wobei die Prozessormittel und der zumindest eine Verbraucher zur Energieversorgung mit der Kommunikations-Schnittstelle gekoppelt sind, wobei die Prozessormittel zur Ansteuerung des zumindest einen elektrischen Verbrauchers nach einer vorgebenen Ansteuerungssequenz ausgebildet sind, um die durch den zumindest einen Verbraucher gebildete Last zu variieren,
**dadurch gekennzeichnet, dass** es sich bei dem Verbraucher um eine Anzeigevorrichtung handelt, und wobei die Ansteuersequenz eine Sequenz zur Ansteuerung der Anzeigevorrichtung für die Wiedergabe von verschiedenen Bildern, für die jeweils eine unterschiedliche Leistungsaufnahme der Anzeigevorrichtung erforderlich ist, beinhaltet.

10. Elektronisches System nach Anspruch 9, wobei die Mittel zum Lesen der Daten zum Aufbau einer Kommunikationsverbindung nach einem RFID- oder NFC-Verfahren mit dem Dokument ausgebildet sind, um die Daten über die Kommunikationsverbindung von dem Dokument zu empfangen.

11. Elektronisches System nach Anspruch 9 oder 10, wobei die Mittel zur Auswertung zur Prüfung ausgebildet sind, ob hinsichtlich der Modulation ein vorgegebenes Kriterium erfüllt ist.

12. Elektronisches System nach Anspruch 9, 10 oder 11, wobei die Mittel zur Auswertung zur Erkennung eines Dokumententyps des Dokuments in Abhängigkeit von der Modulation ausgebildet sind.

13. Elektronisches System nach einem der vorhergehenden Ansprüche 9 bis 12, wobei die Mittel zur Auswertung für eine Demodulation der modulierten primärseitigen Spannung, des modulierten primärseitigen Stroms und/oder der modulierten primärseitigen komplexen Impedanz ausgebildet sind, um eine erste Information von dem Dokument zu empfangen, wobei in Abhängigkeit von der ersten Information ein Lesezugriff durch die Mittel zum Lesen der Daten durchführbar ist.

14. Elektronisches System nach Anspruch 13, wobei das Lesegerät einen optischen Sensor (158) zum Lesen einer zweiten Information von dem Dokument und Mittel (142) zur Ableitung eines kryptografischen Schlüssels aus der ersten Information und der zweiten Information aufweist, wobei die Mittel zum Lesen zur Durchführung des Lesezugriffs mit Hilfe des kryptografischen Schlüssels ausgebildet sind.

## Claims

1. A method for reading data (120) from a document (104) with the aid of a reader (102), wherein the primary side of a transformer (110) is formed by the reader, wherein the document has an electronic memory (118) for storing the data, processor means (114) for reading the data from the memory, and at least one electrical consumer (128, 130, 132) actuatable by the processor means, wherein the secondary side of the transformer is formed by the document, and wherein the processor means and the at least one consumer are coupled to the secondary side for energy supply, said method comprising the following steps:
- applying a primary-side voltage (U) to the primary side to couple energy into the secondary side,
- actuating the at least one load by the processor means in accordance with a predefined actuation sequence, whereby a secondary-side load that varies over time is formed, as a result of which the primary side experiences a modulation,
- evaluating the modulation of the primary side by the reader so as to implement a read access for the purpose of reading the data in accordance with a result of the evaluation, **characterised in that** the consumer is a display device, and wherein the actuation sequence contains a sequence for actuating the display device for playing back various images, for each of which a different power consumption of the display device is necessary.

2. The method according to claim 1, wherein the primary-side voltage has a frequency of more than 1 MHz, in particular 13.56 MHz.

3. The method according to claim 1 or 2, wherein a highfrequency carrier wave is generated by the primary-side voltage to transmit a read command from the reader to the document, wherein the read command is transmitted only once the modulation has been evaluated.

4. The method according to one of the preceding claims, wherein, once the modulation has been evaluated, a communications link is formed between the reader and the document by an RFID or NFC method so as to read out data from the document.

5. The method according to one of the preceding claims, wherein, to evaluate the modulation, a comparison with a predefined criterion is made, wherein a precondition for the implementation of the read access is that the predefined criterion is met.

6. The method according to one of the preceding claims,
wherein the document has a first or a second document type, wherein, by evaluating the modulation, the document type is identified and, depending on the identified document type, the read access is implemented.

7. The method according to claim 6, wherein, once the first document type has been identified, a first cryptographic protocol has to be implemented successfully so as to be able to implement the read access, and wherein, once the second document type has been identified, a second cryptographic protocol has to be implemented so as to be able to implement the read access.

8. The method according to one of the preceding claims, wherein, by evaluating the modulation, a first predetermined piece of information is received by the reader, wherein the document carries an optically readable second piece of information, wherein the second piece of information is read with the aid of an optical sensor (158) of the reader and a key for enabling implementation of the read access is derived from the first and second pieces of information.

9. An electronic system with a reader for a document (104), comprising
- primary-side means (106) for transmitting a carrier wave to inductively couple energy into the document, which forms a secondary side,
- means (134) for evaluating a modulation of the carrier wave due to a change in the secondary-side load,
- means (102; 138) for reading data (120) stored in an electronic memory (118) of the document, according to a result of the evaluation of the modulation, and at least one document with an electronic memory (118) for storing data, processor means (114) for reading the data from the memory, at least one electrical consumer (128, 130, 132) actuatable by the processor means, and a contact-free communications interface (108) for coupling in a carrier wave, wherein the processor means and the at least one consumer are coupled to the communications interface for energy supply, wherein the processor means are configured to actuate the at least one electrical consumer in accordance with a predefined actuation sequence so as to vary the load formed by said at least one electrical consumer, **characterised in that** the consumer is a display device, and wherein the actuation sequence contains a sequence for actuating the display device for playing back various images, for each of which a different power consumption of the display device is necessary.

10. The electronic system according to claim 9, wherein the means for reading the data are configured to form a communications link to the document by an RFID method or an NFC method so as to receive the data from the document via the communications link.

11. The electronic system according to claim 9 or 10, wherein the evaluation means are configured to check whether a predefined criterion is met in terms of the modulation.

12. The electronic system according to claim 9, 10 or 11,
wherein the evaluation means are configured to identify the document type, according to the modulation.

13. The electronic system according to one of preceding claims 9 to 12, wherein the evaluation means are configured for a demodulation of the modulated primary-side voltage, of the modulated primary-side current, and/or of the modulated primary-side complex impedance so as to receive a first piece of information from the document, wherein, depending on the first piece of information, a read access can be implemented by the means for reading the data.

14. The electronic system according to claim 13, wherein the reader comprises an optical sensor (158) for reading a second piece of information from the document and means (142) for deriving a cryptographic key from the first piece of information and from the second piece of information, wherein the reading means are configured to implement the read access with the aid of the cryptographic key.

## Revendications

1. Procédé pour la lecture de données (120) à partir d'un document (104), à l'aide d'un dispositif de lecture (102), dans lequel le côté primaire d'un transformateur (110) est formé par le dispositif de lecture, dans lequel le document comporte une mémoire électronique (118) pour le stockage des données, des moyens de traitement (114) pour la lecture des données à partir de la mémoire, et au moins un consommateur électrique (128, 130, 132) activable par les moyens de traitement, dans lequel le document forme le côté secondaire du transformateur, et dans lequel les moyens de traitement et l'au moins un consommateur sont couplés au côté secondaire pour l'alimentation en énergie, avec les étapes suivantes :
- application d'une tension de côté primaire (U) au côté primaire, pour l'induction d'énergie dans le côté secondaire,
- activation de l'au moins un consommateur par les moyens de traitement, en fonction d'une séquence d'activation prédéfinie, formant ainsi une charge variable dans le temps du côté secondaire, par laquelle le côté primaire subit une modulation,
- évaluation de la modulation du côté primaire par le dispositif de lecture, afin de créer un accès en lecture pour la lecture des données en fonction du résultat de l'évaluation, **caractérisé en ce que** le consommateur est un dispositif d'affichage, et dans lequel la séquence d'activation contient une séquence pour l'activation du dispositif d'affichage, pour la reproduction de différentes images, pour lesquelles le dispositif d'affichage requiert respectivement une consommation d'énergie différente.

2. Procédé selon la revendication 1, dans lequel la tension du côté primaire présente une fréquence supérieure à 1 MHz, en particulier de 13,56 MHz.

3. Procédé selon la revendication 1 ou 2, dans lequel la tension du côté primaire produit une onde porteuse à haute fréquence, pour l'émission d'une instruction de lecture du dispositif de lecture au document, dans lequel l'instruction de lecture n'est envoyée qu'après l'évaluation de la modulation.

4. Procédé selon l'une des revendications précédentes, dans lequel, après l'évaluation de la modulation, l'établissement d'une liaison de communication est exécuté entre le dispositif de lecture et le document selon un procédé RFID ou NFC, pour lire les données à partir du document.

5. Procédé selon l'une des revendications précédentes, dans lequel une comparaison avec un critère prédéfini est effectuée pour l'évaluation de la modulation, dans lequel une condition pour la création de l'accès en lecture consiste en la satisfaction du critère prédéfini.

6. Procédé selon l'une des revendications précédentes, dans lequel le document présente un premier ou un deuxième type de document, dans lequel l'évaluation de la modulation permet de reconnaître le type de document du document, et l'accès en lecture est créé en fonction du type de document reconnu.

7. Procédé selon la revendication 6, dans lequel, après la reconnaissance du premier type de document, un premier protocole cryptographique doit être exécuté avec succès, pour pouvoir créer l'accès en lecture, et dans lequel, après la reconnaissance du deuxième type de document, un deuxième protocole cryptographique doit être exécuté pour pouvoir créer l'accès en lecture.

8. Procédé selon l'une des revendications précédentes, dans lequel l'évaluation de la modulation permet de recevoir une première information par le dispositif de lecture, dans lequel le document porte une deuxième information lisible optiquement, dans lequel la deuxième information est lue à l'aide d'un capteur optique (158) du dispositif de lecture, et une clé permettant la création de l'accès en lecture est dérivée des première et deuxième informations.

9. Système électronique avec un dispositif de lecture pour un document (104), avec
- des moyens côté primaire (106) pour l'envoi d'une onde porteuse, pour le couplage inductif d'énergie dans le document formant un côté secondaire,
- des moyens (134) pour l'évaluation d'une modulation de l'onde porteuse sur la base d'une modification de la charge du côté secondaire,
- des moyens (102 ; 138) pour la lecture de données (120) stockées dans une mémoire électronique (118) du document en fonction d'un résultat de l'évaluation de la modulation et d'au moins un document avec une mémoire électronique (118) pour le stockage de données, des moyens de traitement (114) pour la lecture des données à partir de la mémoire, au moins un consommateur électrique (128, 130, 132) activable par les moyens de traitement, et une interface de communication (108) sans contact, pour l'induction d'une onde porteuse, dans lequel les moyens de traitement et l'au moins un consommateur sont couplés avec l'interface de communication pour l'alimentation en énergie, dans lequel les moyens de traitement sont conçus pour l'activation de l'au moins un consommateur électrique selon une séquence d'activation prédéfinie, afin de varier la charge formée par l'au moins un consommateur, **caractérisé en ce que** le consommateur est un dispositif d'affichage, et dans lequel la séquence d'activation contient une séquence pour l'activation du dispositif d'affichage pour la reproduction de différentes images pour lesquelles le dispositif d'affichage requiert respectivement une consommation d'énergie différente.

10. Système électronique selon la revendication 9, dans lequel les moyens pour la lecture des données sont conçus pour l'établissement d'une liaison de communication avec le document selon un procédé RFID ou NFC, pour recevoir les données du document par le biais de la liaison de communication.

11. Système électronique selon la revendication 9 ou 10, dans lequel les moyens pour l'évaluation sont conçus pour contrôler si la modulation satisfait un critère prédéfini.

12. Système électronique selon la revendication 9, 10 ou 11, dans lequel les moyens pour l'évaluation sont conçus pour reconnaître un type de document du document en fonction de la modulation.

13. Système électronique selon l'une des revendications précédentes 9 à 12, dans lequel les moyens pour l'évaluation sont conçus pour une démodulation de la tension modulée côté primaire, du courant modulé côté primaire et/ou de l'impédance complexe modulée côté primaire, afin de recevoir une première information du document, dans lequel un accès en lecture peut être créé en fonction de la première information par les moyens pour la lecture des données.

14. Système électronique selon la revendication 13, dans lequel le dispositif de lecture comporte un capteur optique (158) pour la lecture d'une deuxième information du document et des moyens (142) pour la dérivation d'une clé cryptographique à partir de la première information et de la deuxième information, dans lequel les moyens pour la lecture sont conçus pour créer un accès en lecture à l'aide de la clé cryptographique.
